# EUROPÄISCHE PATENTSCHRIFT

(11) **EP 3 527 115 B1**
(45) Veröffentlichungstag und Bekanntmachung des Hinweises auf die Patenterteilung: **03.03.2021**
(21) Anmeldenummer: 19151313.4
(22) Anmeldetag: 11.01.2019
(51) Int. Cl.: A47J 43/07

(54) **KÜCHENMASCHINE MIT KOCHFUNKTION**
KITCHEN APPLIANCE WITH COOKING FUNCTION
ROBOT DE CUISINE À FONCTION DE CUISSON

(30) Priorität: 15.02.2018 DE 202018100821 U
(43) Veröffentlichungstag der Anmeldung: 21.08.2019
(73) Patentinhaber: Hoyer Handel GmbH, 22761 Hamburg (DE)
(72) Erfinder: HOYER, Matthias, 22605 Hamburg (DE)
(74) Vertreter: Raffay & Fleck

(56) Entgegenhaltungen:
- GB-A- 2 547 683
- PT-E- 1 747 745
- US-A1- 2015 265 983

## Beschreibung

Die vorliegende Erfindung betrifft eine Küchenmaschine mit den Merkmalen des Oberbegriffs des Anspruchs 1. Derartige Küchenmaschinen sind hinlänglich bekannt. Zum Beispiel ist eine solche Küchenmaschine in der DE 44 14 821 A1 beschrieben.

Mit derartigen Küchenmaschinen können nun in jedenfalls teilweise automatisierten Verarbeitungen Speisen aus verschiedenen Lebensmittelzutaten zubereitet werden, zum Beispiel unter Verwendung von rohem Gemüse Gemüsesuppen gekocht werden oder dergleichen. Diese Küchenmaschinen erfreuen sich zunehmender Beliebtheit und werden bereits in vielen Haushalten eingesetzt.

Da diese Küchenmaschinen im Zuge der Bearbeitungsprozesse auch die in dem Gefäß befindliche Füllung, die dort vorhandenen, häufig mit einer Flüssigkeit versetzten, Lebensmittel erhitzen, dies bis auf Temperaturen bis an die 100 °C, sind entsprechende Vorsichtsmaßnahmen zu treffen, damit bei einem Umgang mit der Küchenmaschine die Anwender keinen Schaden, zum Beispiel in Form von Verbrennungen, erfahren. Auch das im Betrieb in dem Gefäß rotierende Rühr- und/oder Zerkleinerungswerkzeug ist potentiell gefährlich, da es zumeist mit Schneidklingen versehen ist zum Zerkleinern von Zutaten. Es gilt hier also zu verhindern, dass eine Bedienperson unachtsam in das Gefäß greifen kann, wenn zum Beispiel das Rühr- und/oder Zerkleinerungswerkzeug noch rotiert. Auch ist sicherzustellen, dass der Antrieb nicht etwa anlaufen kann, wenn das Gefäß nicht richtig in der Aufnahme angeordnet und dort festgelegt ist und wenn der Deckel nicht ordnungsgemäß die Öffnung des Gefäßes verschließt.

Entsprechend weisen bekannte Küchenmaschinen der eingangs genannten Art Sicherheitsverriegelungen auf, die insbesondere auch abfragen, ob der Deckel in einem korrekt verriegelten Sitz die Öffnung des Gefäßes verschließt. Nur dann, wenn dies der Fall ist, wird bei bekannten Küchenmaschinen ein weiterer Betrieb, insbesondere ein rotierendes Antreiben des Rühr- und/oder Zerkleinerungswerkzeuges sowie ein Betrieb der Heizeinrichtung ermöglicht. Entsprechend ist es für einen Anwender einer Küchenmaschine der vorstehend geschilderten Art wichtig, bei einer Inbetriebnahme der Küchenmaschine und dem Start eines Bearbeitungsablaufes den Deckel korrekt auf dem in die Aufnahme eingesetzten Gefäß anzusetzen und in die Verriegelungsstellung zu bringen.

Im Stand der Technik gibt es Vorschläge für eine automatisch betätigte und motorisch betriebene Verriegelungseinrichtung, die einen nicht mehr zwischen einer Entriegelungsstellung und einer Verriegelungsstellung zu bewegenden Deckel durch Bewegen von gesonderten Riegelelementen sichert, wie dies zum Beispiel in der DE 10 2014 113 571 A1 gezeigt und beschrieben ist. Eine solche Verriegelungseinrichtung kann zwar eine sicherere Verriegelung des Deckels auf der Gefäßöffnung besorgen, stellt aber eine konstruktiv aufwendige Lösung dar, wobei durch die vorzusehenden Antriebe für die Riegelelemente eine Störanfälligkeit gegeben ist, die Küchenmaschine nicht mehr funktioniert, wenn zum Beispiel diese Antriebe versagen.

Entsprechend sehen alternative Küchenmaschinen weiterhin mechanische, typischerweise von dem Benutzer per Hand zu bedienende Deckelverriegelungen vor. Bei diesen bekannten Lösungen muss der Benutzer den Deckel in eine Verriegelungsstellung bewegen, wobei er am Ende selbst beurteilen muss, ob der Deckel korrekt diese Verriegelungsstellung erreicht hat. Ist der Deckel dabei zum Beispiel nicht weit genug in Richtung der Verriegelungsstellung bewegt oder ist er nicht korrekt eingesetzt, zum Beispiel verkanntet, kann entweder die korrekte Verriegelung des Deckels nicht detektiert werden, wird von der Steuerung ein Betrieb der Küchenmaschine nicht freigegeben, oder es wird - schlimmstenfalls - fälschlicherweise bereits eine Verriegelung wahrgenommen, sodass der Betrieb der Küchenmaschine erfolgen kann, ohne dass der Deckel sicher in der Verriegelungsstellung befindlich ist. Im letztgenannten Fall kann es dann dazu kommen, dass der Deckel während des Betriebs sich von dem Gefäß löst und dabei zum Beispiel mit schneller Rotation des Rühr- und/oder Zerkleinerungswerkzeugs bewegte heiße Flüssigkeit aus dem Gefäß austritt und in die Umgebung der Küchenmaschine spritzt, dort Sachen beschädigt oder gar zu Verletzungen von sich in diesem Bereich aufhaltenden Personen führt.

Für die Bediener ebenso wichtig wie das Erkennen der korrekten Verriegelungsstellung des Deckels ist ein Erkennen der vollständigen Entriegelung des Deckels, wenn nach erfolgter Verarbeitung der Lebensmittelzubereitung oder in einem Zwischenschritt der Deckel von dem Gefäß entfernt werden muss, um zubereitetes Lebensmittel zu entnehmen oder aber weitere Zutaten in das Gefäß einzufüllen. Auch hier geben die bekannten, einen Deckel, der durch mechanisches Bewegen zwischen einer Verriegelungs- und einer Entriegelungsstellung verlagert wird, aufweisenden Küchenmaschinen dem Benutzer keine ausreichende Rückmeldung darüber, ob er die korrekte Entriegelungsstellung durch Bewegen des Deckels erreicht hat.

Aus der GB 2 547 683 A ist eine Küchenmaschine bekannt, bei welcher dem Benutzer der Status der Verriegelung unter anderem durch akustische Signale zusätzlich zu einer optischen Anzeige angezeigt wird. Die DE102014108928 zeigt eine Küchenmaschine, bei welcher der Verriegelungsstatus durch ein Tonsignal und verschiedenfarbige LED Signale angezeigt wird.

Entsprechend besteht ein Bedarf, hier eine Verbesserung zu schaffen und dem Benutzer insbesondere ein besseres Erkennen der Deckelstellung, also der Verriegelungsstellung und der Entriegelungsstellung, zu ermöglichen.

Diese Aufgabe wird erfindungsgemäß bei einer Küchenmaschine der eingangs genannten Art dadurch gelöst, dass eine mit der Steuerung verbundene Sensorik zum Detektieren der Verriegelungsstellung und der Entriegelungsstellung des Deckels vorgesehen ist und dass ein mit der Steuerung verbundener akustischer Signalgeber vorgesehen ist, der dazu eingerichtet ist, ein erstes akustisches Signal auszugeben, wenn der Deckel bewegt ausgehend von der Entriegelungsstellung die Verriegelungsstellung erreicht, und ein zweites, von dem ersten akustischen Signal verschiedenes akustisches Signal auszugeben, wenn der Deckel bewegt ausgehend von der Verriegelungsstellung die Entriegelungsstellung erreicht.

Durch diese mit der Erfindung erstmals geschaffene akustische Rückmeldung erhält der Benutzer zuverlässig ein klares Signal, welches ihm nicht nur bedeutet, dass der Deckel die Verriegelungsstellung korrekt erreicht hat, die Küchenmaschine also in Betrieb genommen werden kann, sondern auch dass der Deckel bei einem Entriegeln die Entriegelungsstellung korrekt erreicht hat und von dem Gefäß entnommen werden kann. Da derartige Küchenmaschinen, wie insbesondere auch mit Vorteil die erfindungsgemäße Küchenmaschine, für die Anzeige der Abläufe und gegebenenfalls weiterer Informationen über ein typischerweise großflächiges Display verfügen, ist der Benutzer in der Regel mit optischen Signalen bereits überflutet, sodass erfindungsgemäß gezielt von einer optischen Anzeige der Deckelposition (Verriegelungsstellung und Entriegelungsstellung) abgesehen wurde, stattdessen eine akustische Signalausgabe gewählt ist. Für eine klare Unterscheidung der erreichten Positionen sind zwei unterschiedliche akustische Signale vorgesehen. Dies können im einfachsten Fall zum Beispiel Töne unterschiedlicher Tonhöhe, unterschiedlicher Tonabfolge sein oder auch unterschiedliche, komplexere Signale akustischer Art. Dabei werden die Signale mit Vorteil nur einmalig ausgegeben und zwar dann, wenn der Deckel nach einer Bewegung in die jeweilige Position entweder die Verriegelungsstellung erreicht hat (es ertönt das akustische Verriegelungssignal) oder die Entriegelungsstellung erreicht hat (es ertönt das akustische Entriegelung Signal).

Mit dieser Gestaltung erkennt der Benutzer also durch einfache akustische Signalisierung, dass er die korrekte Stellung des Deckels, zum Beispiel die Verriegelungsstellung, erreicht hat. Ertönt das Signal nicht, so weiß der Benutzer dann, dass er den Deckel gegebenenfalls noch einmal korrekt aufzusetzen und in die Verriegelungsstellung zu bewegen hat bzw. noch einmal aus der Verriegelungsstellung korrekt weiter zu bewegen hat bis in die Entriegelungsstellung.

So weiß der Benutzer insbesondere, dass ohne das Ertönen des jeweiligen Signals ein weiteres Betätigen der Küchenmaschine nicht möglich ist, insbesondere ohne ein Ertönen des akustischen Signals für die Verriegelungsstellung die Inbetriebnahme der Maschine nicht erfolgen kann. Entsprechend kann es dann z.B. auch nicht passieren, dass eine Bedienperson in dem Glauben, den Deckel richtig in die Verriegelungsstellung gebracht zu haben, durch Betätigen eines Schalters die Maschine zu starten sucht und anschließend anderen Tätigkeiten nachgeht, um nach Ablauf einer Verarbeitungszeit ein zubereitetes Lebensmittel vorzufinden, nach dieser abgelaufenen Zeit dadurch böse überrascht wird, dass die Verarbeitung der Lebensmittel überhaupt nicht erfolgt ist, da die Küchenmaschine nicht starten konnte aufgrund der nicht korrekt erreichten Verriegelungsstellung des Deckels.

Der Deckel der erfindungsgemäßen Küchenmaschine kann dabei insbesondere über eine mit einem Verschlussmittel verschließbare Zugangsöffnung verfügen, über die auch bei bereits im Bearbeitungsprozess befindlicher Küchenmaschine weitere Zutaten in das Gefäß eingefüllt werden können. Dabei ist, wie im Stand der Technik üblich, der Durchmesser bzw. die Öffnungsfläche einer solchen Zugangsöffnung so gering gehalten und die Zugangsöffnung derart mit Abstand zum Rand des Gefäßes im Bereich der Öffnung gelegen, dass bei einem Öffnen der Zugangsöffnung kein durch das laufende Rühr- und/oder Zerkleinerungswerkzeug bewegtes Lebensmittelgut aus der Öffnung heraustreten, zum Beispiel herausspritzen kann.

Die erfindungsgemäß Küchenmaschine kann, wie für derartige Maschinen im Stand der Technik üblich, auch über weitere Funktionen verfügen, zum Beispiel eine Wägefunktion, bei der ein in dem Gefäß befindlicher Inhalt bei in der Aufnahme eingesetztem Gefäß ausgewogen und dessen Masse bestimmt werden kann. Auch kann die erfindungsgemäß Küchenmaschine über vorgegebene Programmabläufe, die z.B. auf einem mit der Steuerung verbunden oder mit dieser integrierten Rechnermodul abgelegt sind, verfügen, die ein in mehreren unterschiedlichen aufeinanderfolgenden Bearbeitungsschritten durchgeführtes Zubereiten von Lebensmitteln in einem automatischen Ablauf ermöglichen (als Rezepte).

Auch kann die erfindungsgemäß Küchenmaschine über eine Schnittstelle, insbesondere eine drahtlose Schnittstelle, für die Anbindung an ein digitales Kommunikationsnetzwerk, insbesondere das Internet, verfügen, um mit diesem Kommunikationsnetzwerk in einem Datenaustausch zu stehen, zum Beispiel für das Aufspielen von Software-Updates, das Einspielen von Rezeptabläufen auf die Steuerung der Maschine und dergleichen. Auch kann eine Kommunikationsschnittstelle für eine direkte bidirektionale Kommunikation mit externen elektronischen Geräten, wie zum Beispiel Tablet Computern oder Smartphones, vorgesehen sein, zum Beispiel nach dem Bluetooth Standard.

Eine erfindungsgemäße Küchenmaschine weist mit Vorteil eine Halteeinrichtung zum Festlegen des Gefäßes in der Aufnahme auf, wobei die Halteeinrichtung zwischen einer Halteposition, in der das Gefäß in der Aufnahme festgelegt ist, und einer Freigabeposition, in der das Gefäß aus der Aufnahme gelöst und entnommen werden kann, verlagerbar ist. Die Mittel zum Verlagern der Halteeinrichtung in die Halteposition sind dabei mit dem Deckel in einer solchen Weise gekoppelt, dass die Halteeinrichtung in die Halteposition verlagert wird, wenn der Deckel in die Verriegelungsstellung bewegt wird, und dass die Halteeinrichtung in die Freigabeposition bewegt wird, wenn der Deckel in die Entriegelungsstellung bewegt wird. Durch diese Lösung wird erreicht, dass durch ein korrektes Aufsetzen auf die Öffnung des in die Aufnahme eingesetzten Gefäßes und in die Verriegelungsstellung Verbringen des Deckels nicht nur der Deckel in einer die Öffnung sicher verschließenden Position verriegelt wird, sondern zugleich auch eine sichere Festlegung und Verriegelung des von dem Gehäuse und aus der Aufnahme ansonsten abnehmbaren Gefäßes an der Aufnahme, sodass dieses während des Betriebes der Küchenmaschine fest in der Aufnahme verankert und mit dem Gehäuse verbunden ist. Die Kopplung zwischen dem Deckel und den Mitteln zum Verlagern der Halteeinrichtung kann prinzipiell rein elektrisch bzw. elektronisch verwirklicht werden. Sie wird aber mit Vorteil bei der erfindungsgemäßen Küchenmaschine zumindest teilweise mechanisch umgesetzt. Zumindest teilweise mechanisch heißt dabei, dass die Mittel zum Verlagern der Halteeinrichtung jedenfalls in einem Abschnitt mechanische Übertragungsmittel und/oder mechanische Taster oder andere Positionserfassungsmittel umfassen. Dabei kann insbesondere eine durch ein Federelement vertikal nach oben vorgespannte, in vertikaler Richtung bewegbare, mit dem Deckel zusammenwirkende Taststange einen Bestandteil der Kopplung bilden. Eine solche Taststange kann zum Beispiel an dem Gefäß festgelegt sein, sodass bei einem in die Aufnahme eingesetzten Gefäß und einem auf die Öffnung aufgesetzten und in die Verriegelungsstellung verbrachten Deckel die Taststange vertikal niedergedrückt wird und im Bereich der Aufnahme mit einem dort gelegenen Ende entweder eine mechanische Bewegung für die Verlagerung der Halteeinrichtung in die Halteposition auslöst oder aber einen elektrischen Schalter oder dergleichen betätigt, um so die Halteeinrichtung in die Halteposition zu verlagern.

Die Sensorik, die die Position des Deckels, insbesondere das Erreichen der Verriegelungsstellung bzw. der Entriegelungsstellung detektiert, kann erfindungsgemäß insbesondere mit der Halteeinrichtung und/oder den Mitteln zum Verlagern der Halteeinrichtung zusammenwirken. Zum Beispiel kann die Sensorik erfassen, dass ein mechanisch bewegtes Element der Kopplung in eine Position verlagert worden ist, die es bei Erreichen der Verriegelungsstellung einnimmt. Es kann die Sensorik aber auch zum Beispiel die Schaltstellung eines durch die Kopplung betätigten elektrischen Schalters auswerten, die der Schalter erreicht, wenn der Deckel in die Verriegelungsstellung verbracht ist.

In einer derzeit bevorzugten Ausgestaltungsvariante der Küchenmaschine wird der Deckel durch eine Drehbewegung um eine quer, insbesondere senkrecht, zu einer durch die Öffnung des Gefäßes definierten Ebene verlaufende Drehachse zwischen der Ent- und der Verriegelungsstellung bewegt. Insbesondere kann der Verschluss des Deckels durch an dem Gefäß im Bereich der Öffnung und an dem Deckel jeweils angeordnete Schließstrukturen erreicht werden, die im Zusammenwirken einen Verschluss des Deckels nach Art eines Bajonettverschlusses ergeben.

## Patentansprüche

1. Küchenmaschine mit
• einem Gehäuse,
• einem an einer im Betrieb oben gelegenen Seite eine Öffnung aufweisenden Gefäß zur Aufnahme von Lebensmitteln für die Zubereitung von Speisen,
• einem in dem Gefäß angeordneten Rühr- und/oder Zerkleinerungswerkzeug,
• einem in dem Gehäuse angeordneten Antrieb zum rotierenden Antreiben des Rühr- und/oder Zerkleinerungswerkzeuges,
• einer an dem Gehäuse vorgesehenen Aufnahme für das Gefäß, wobei in der Aufnahme eine Kupplung für die Übertragung eines von dem Antrieb erzeugten Drehmoments auf das in dem Gefäß angeordnete Rühr- und/oder Zerkleinerungswerkzeug ausgebildet ist,
• einer in dem Gehäuse angeordneten Heizvorrichtung zum Erhitzen von in dem in der Aufnahme angeordneten Gefäß eingebrachten Lebensmitteln,
• einem Deckel zum Verschließen der Öffnung des Gefäßes, wobei der Deckel mechanisch zwischen einer Verriegelungsstellung, in der er die Öffnung des Gefäßes dicht verschließt, und einer Entriegelungsstellung, in der er von der Öffnung des Gefäßes abgenommen werden kann, bewegbar ist,
• und einer Steuerung für den automatischen Betrieb der Küchenmaschine, insbesondere des Antriebs sowie der Heizvorrichtung, wobei eine mit der Steuerung verbundene Sensorik zum Detektieren der Verriegelungsstellung und der Entriegelungsstellung des Deckels vorgesehen ist und wobei ein mit der Steuerung verbundener akustischer Signalgeber vorgesehen ist, **gekennzeichnet dadurch, dass** dieser dazu eingerichtet ist, ein erstes akustisches Signal auszugeben, wenn der Deckel bewegt ausgehend von der Entriegelungsstellung die Verriegelungsstellung erreicht, und ein zweites, von dem ersten akustischen Signal verschiedenes akustisches Signal auszugeben, wenn der Deckel bewegt ausgehend von der Verriegelungsstellung die Entriegelungsstellung erreicht.

2. Küchenmaschine nach Anspruch 1, **gekennzeichnet durch** eine Halteeinrichtung zum Festlegen des Gefäßes in der Aufnahme, wobei die Halteeinrichtung zwischen einer Halteposition, in der das Gefäß in der Aufnahme festgelegt ist, und einer Freigabeposition, in der das Gefäß aus der Aufnahme gelöst und entnommen werden kann, verlagerbar ist, wobei Mittel zum Verlagern der Halteeinrichtung in die Halteposition mit dem Deckel in einer solchen Weise gekoppelt sind, dass die Halteeinrichtung in die Halteposition verlagert wird, wenn der Deckel in die Verriegelungsstellung bewegt wird, und dass die Halteeinrichtung in die Freigabeposition bewegt wird, wenn der Deckel in die Entriegelungsstellung bewegt wird.

3. Küchenmaschine nach Anspruch 2, **dadurch gekennzeichnet, dass** die Kopplung zwischen dem Deckel und den Mitteln zum Verlagern der Halteeinrichtung zumindest teilweise eine mechanische ist.

4. Küchenmaschine nach Anspruch 3, **gekennzeichnet durch** wenigstens eine durch ein Federelement vertikal nach oben vorgespannte, in vertikaler Richtung bewegbare, mit dem Deckel zusammenwirkende Taststange als Bestandteil der Kopplung.

5. Küchenmaschine nach einem der Ansprüche 2 bis 4, **dadurch gekennzeichnet, dass** die Sensorik mit der Halteeinrichtung und/oder den Mitteln zum Verlagern der Halteeinrichtung zusammenwirkt.

6. Küchenmaschine nach einem der vorhergehenden Ansprüchen, **dadurch gekennzeichnet, dass** der Deckel durch eine Drehbewegung um eine quer, insbesondere senkrecht, zu einer durch die Öffnung des Gefäßes definierten Ebene verlaufende Drehachse zwischen der Ent- und der Verriegelungsstellung bewegbar ist.

7. Küchenmaschine nach einem der vorhergehenden Ansprüche, **dadurch gekennzeichnet, dass** an dem Gefäß im Bereich der Öffnung und am dem Deckel jeweils Schließstrukturen vorgesehen sind, die im Zusammenwirken einen Verschluss des Deckels nach Art eines Bajonettverschlusses ergeben.

## Claims

1. A kitchen apppliance with
• a housing,
• a container with an opening on a side located at the top during operation for receiving food for the preparation of meals,
• a stirring and/or crushing device arranged in the container,
• a drive arranged in the housing for rotatingly driving the stirring and/or comminuting tool,
• a receptacle provided on the housing for the container, wherein a coupling is formed in the receptacle for transmitting a torque generated by the drive to the stirring and/or comminuting tool arranged in the container,
• a heating device arranged in the housing for heating food placed in the vessel arranged in the container,
• a lid for closing the opening of the container, the lid being mechanically movable between a locking position in which it tightly closes the opening of the container and an unlocking position in which it can be removed from the opening of the container,
• and a control for the automatic operation of the kitchen apppliance, in particular the drive as well as the heating device,
wherein a sensor system connected to the control system is provided for detecting the locking position and the unlocking position of the lid, and wherein an acoustic signal generator connected to the control is provided, **characterised in that** it is set up to emit a first acoustic signal when the lid moves from the unlocked position to the locked position, and to emit a second acoustic signal, different from the first acoustic signal, when the lid moves from the locked position to the unlocked position.

2. A kitchen apppliance according to claim 1, **characterised by** a retaining means for securing the container in the receptacle, the retaining means being displaceable between a retaining position in which the container is secured in the receptacle and a release position in which the container can be released from the receptacle and removed, wherein means for displacing the retaining means to the retaining position are coupled to the lid in such a manner that the retaining means is displaced to the retaining position when the lid is moved to the locking position and that the retaining means is moved to the release position when the lid is moved to the unlocking position.

3. A kitchen apppliance according to claim 2, **characterised in that** the coupling between the lid and the means for displacing the holding device is at least partly a mechanical one.

4. A kitchen appliance according to claim 3, **characterised by** at least one feeler rod, which is biased vertically upwards by a spring element, is - movable in the vertical direction and cooperates with the lid, as a - component of the coupling.

5. A kitchen apppliance according to any one of claims 2 to 4, **characterised in that** the sensor system cooperates with the holding device and/or the means for displacing the holding device.

6. A kitchen apppliance according to one of the preceding claims, **characterised in that** the lid is movable between the unlocked and locked positions by a rotary movement about an axis of rotation extending transversely, in particular perpendicularly, to a plane defined by the opening of the container.

7. A kitchen apppliance according to one of the preceding claims, **characterised in that** closing structures are provided on the receptacle in the region of the opening and on the lid, which in cooperation produce a closure of the lid in the manner of a bayonet lock.

## Revendications

1. Robot de cuisine avec
• un logement,
• un récipient avec une ouverture sur un côté situé en haut pendant le fonctionnement pour recevoir des aliments pour la préparation des repas,
• un dispositif d'agitation et/ou de broyage disposé dans le récipient,
• un entraînement disposé dans le logement pour entraîner en rotation l'outil de brassage et/ou de broyage,
• un récipient prévu sur le logement pour le récipient, dans lequel un accouplement est formé pour transmettre un couple généré par l'entraînement à l'outil d'agitation et/ou de broyage disposé dans le réceptacle,
• un dispositif de chauffage disposé dans le logement pour chauffer les aliments placés dans le récipient disposé dans le récipient,
• un couvercle pour fermer l'ouverture du récipient, le couvercle étant mécaniquement mobile entre une position de verrouillage dans laquelle il ferme hermétiquement l'ouverture du récipient et une position de déverrouillage dans laquelle il peut être retiré de l'ouverture du récipient,
• et une commande pour le fonctionnement automatique du robot de cuisine, en particulier l'entraînement ainsi que le dispositif de chauffage,
dans lequel un système de capteurs relié au système de commande est prévu pour détecter la position de verrouillage et la position de déverrouillage du couvercle, et
dans lequel un générateur de signaux acoustiques connecté à la commande est prévu,
**caractérisé en ce qu'**il est configuré pour émettre un premier signal acoustique lorsque le couvercle passe de la position déverrouillée à la position verrouillée, et pour émettre un second signal acoustique, différent du premier signal acoustique, lorsque le couvercle passe de la position verrouillée à la position déverrouillée.

2. Robot de cuisine selon la revendication 1, **caractérisé par** un moyen de retenue pour fixer le récipient dans le réceptacle, le moyen de retenue étant déplaçable entre une position de retenue dans laquelle le récipient est fixé dans le récipient et une position de libération dans laquelle le récipient peut être libéré du récipient et retiré, dans lequel des moyens pour déplacer le moyen de retenue vers la position de retenue sont couplés au couvercle de telle manière que le moyen de retenue est déplacé vers la position de retenue lorsque le couvercle est déplacé vers la position de verrouillage et que le moyen de retenue est déplacé vers la position de libération lorsque le couvercle est déplacé vers la position de déverrouillage.

3. Robot de cuisine selon la revendication 2, **caractérisé en ce que** l'accouplement entre le couvercle et le moyen de déplacement du dispositif de maintien est au moins partiellement mécanique.

4. Robot de cuisine selon la revendication 3, **caractérisé par** au moins une tige de palpage, qui est sollicitée verticalement vers le haut par un élément de ressort, est mobile dans la direction verticale et coopère avec le couvercle, en tant que composant de l'accouplement.

5. Robot de cuisine selon l'une quelconque des revendications 2 à 4, - **caractérisé en ce que** le système de capteurs coopère avec le dispositif de maintien et/ou les moyens de déplacement du dispositif de maintien.

6. Robot de cuisine selon l'une des revendications précédentes, **caractérisé en ce que** le couvercle est mobile entre les positions déverrouillée et verrouillée par un mouvement de rotation autour d'un axe de rotation s'étendant transversalement, en particulier perpendiculairement, à un plan défini par l'ouverture du récipient.

7. Robot de cuisine selon l'une des revendications précédentes, **caractérisé en ce que** des structures de fermeture sont prévues sur le récipient dans la zone de l'ouverture et sur le couvercle, qui produisent en coopération une fermeture du couvercle à la manière d'une fermeture à baïonnette.
